# EUROPÄISCHE PATENTANMELDUNG

(11) **EP 1 216 810 A1**
(43) Veröffentlichungstag der Anmeldung: **26.06.2002**
(21) Anmeldenummer: 00127061.0
(22) Anmeldetag: 11.12.2000
(51) Int. Cl.: B29C 67/24, B29C 70/58, C08J 3/22, C08K 3/34, C08K 9/04

(54) **Kunststoffmaterial und Verfahren zur Herstellung eines Kunststoffmaterials**

(71) Anmelder: Roth Werke GmbH, 35232 Dautphetal (DE)
(72) Erfinder: Die Erfindernennung liegt noch nicht vor
(74) Vertreter: Rohmann, Michael, Dr.

(57) **Zusammenfassung**

Kunststoffmaterial, wobei eine Kunststoffmatrix aus zumindest einem Kunststoff vorgesehen ist. Diese Kunststoffmatrix enthält eine Mischung aus zumindest einem Schichtsilikat und zumindest einer polymeren Verbindung. Die polymere Verbindung weist zumindest eine Carboxylatgruppe auf und liegt als Ammoniumsalz vor.

## Beschreibung

Die Erfindung betrifft ein Kunststoffmaterial, insbesondere für Behälter zur Aufnahme von fluiden Medien. Die Erfindung betrifft fernerhin ein Verfahren zur Herstellung eines solchen Kunststoffmaterials. - Die Erfindung befasst sich insbesondere mit einem permeationsreduzierten Kunststoffmaterial, das vorzugsweise zur Herstellung von Behältern zur Aufnahme von Flüssigkeiten oder Gasen eingesetzt wird. Es liegt aber auch im Rahmen der Erfindung, dass das erfindungsgemäße Kunststoffmaterial zur Herstellung von Behältern für die Aufnahme beliebiger Materialien verwendet wird, oder dass das Kunststoffmaterial für andere Zwecke eingesetzt wird. - Permeationsreduzierung meint im Rahmen der Erfindung insbesondere, dass die Permeation von fluiden Medien durch das erfindungsgemäße Kunststoffmaterial bzw. durch Wandungen aus dem erfindungsgemäßen Kunststoffmaterial weitgehend unterdrückt wird.

Es sind verschiedene Behälter zur Aufnahme von flüssigen Kohlenwasserstoffen bekannt, die z. B. aus Polyolefinen oder Polyamiden bestehen. Dabei handelt es sich um Kraftstofftanks oder Heizöltanks. Vor allem bei längerer Lagerdauer können die flüssigen Inhaltsstoffe aufgrund von Permeation durch die Behälterwände hindurchtreten. Es versteht sich, dass dies nicht zuletzt aus umwelttechnischen Gründen nicht in Kauf genommen werden kann. Um die Verluste an den flüssigen Inhaltsstoffen zu minimieren, sind in der Praxis verschiedene Maßnahmen zur Reduzierung der Permeation bekannt. Beispielsweise werden Kraftstoffbehälter zur Verminderung der Permeation des Kraftstoffes mit einer fluorierten, sulfonierten oder plasmapolymerisierten Oberfläche versehen. Außerdem ist es bekannt, dass die Wandungen von Heizöltanks zur Reduzierung der Permeation aus Blends von Polyethylen und beispielsweise Polyamid bestehen. Die Permeationseigenschaften dieser bekannten Kunststoffbehälter lassen jedoch zu wünschen übrig.

Demgegenüber liegt der Erfindung das technische Problem zugrunde, ein Kunststoffmaterial anzugeben, mit dem die Permeation von fluiden Medien durch Wandungen aus dem Kunststoffmaterial weitgehend verhindert wird, wobei insbesondere die Permeation von flüssigen Kohlenwasserstoffen/Kohlenwasserstoffgemischen und vor allem auch die Permeation von Kraftstoffen und Heizölen durch das Kunststoffmaterial vermieden wird.

Zur Lösung dieses technischen Problems lehrt die Erfindung ein Kunststoffmaterial, insbesondere für Behälter zur Aufnahme von fluiden Medien,
wobei eine Kunststoffmatrix aus zumindest einem Kunststoff vorgesehen ist,
wobei diese Kunststoffmatrix eine Mischung aus zumindest einem Schichtsilikat und zumindest einer polymeren Verbindung enthält und
wobei die polymere Verbindung zumindest eine Carboxylatgruppe aufweist und als Ammoniumsalz vorliegt. - Carboxylatgruppe meint im Rahmen der Erfindung eine Carboxylgruppe in Anionenform (-COO⁻). Diesem Carboxylatanion ist erfindungsgemäß ein Ammoniumkation zugeordnet, so dass die polymere Verbindung als Ammoniumsalz vorliegt.

Schichtsilikat meint im Rahmen der Erfindung Silikate mit blättchenförmiger bzw. plättchenförmiger Struktur. Solche Schichtsilikate werden auch als Nanosilikate bezeichnet. Grundsätzlich ist es aus dem Stand der Technik bekannt, Schichtsilikate in Polymeren bzw. Kunststoffen zu dispergieren. Die resultierenden Produkte werden als Nanocomposites bezeichnet. - Mit der als Ammoniumsalz vorliegenden polymeren Verbindung wird erfindungsgemäß ein Schichtsilikat modifiziert. Dieses modifizierte Schichtsilikat wird zur Veränderung bzw. Verbesserung der Eigenschaften der Kunststoffmatrix in die Kunststoffmatrix eingebracht.

Kunststoffmatrix meint im Rahmen der Erfindung eine Kunststoffmasse, in der das Schichtsilikat bzw. das modifizierte Schichtsilikat verteilt ist. Vorzugsweise liegt eine gleichmäßige, homogene Verteilung des modifizierten Schichtsilikates in der Kunststoffmatrix vor. Insoweit liegt es im Rahmen der Erfindung, dass das modifizierte Schichtsilikat in der Kunststoffmatrix vollständig dispergiert wird und mindestens teilweise als monomolekulare Schicht vorliegt.

Nach einer Ausführungsform der Erfindung besteht die Kunststoffmatrix aus zumindest einem Polyolefin. Bei dem Polyolefin kann es sich um Polyethylen und/oder Polypropylen und/oder Polybutylen handeln. Nach sehr bevorzugter Ausführungsform, der im Rahmen der Erfindung ganz besondere Bedeutung zukommt, besteht die Kunststoffmatrix aus Polyethylen. Kunststoffmatrix aus Polyethylen meint hier insbesondere eine Matrix aus reinem Polyethylen oder aus ethylenhaltigen Copolymerisaten mit zumindest einem Alken, beispielsweise Buten, Hexen oder Octen. Es liegt jedoch auch im Rahmen der Erfindung, eine Kunststoffmatrix aus Polyethylen-Blends einzusetzen, die hauptsächlich Polyethylen enthalten bzw. über 50 Gew.-% Polyethylen enthalten. Als Polyethylen kann grundsätzlich LDPE oder HDPE eingesetzt werden.

Nach einer anderen Ausführungsform der Erfindung besteht die Kunststoffmatrix aus zumindest einem Kunststoff aus der Gruppe "Polyamid, Polyester, Polyol, Polyurethan, Polystyrol, Kautschuk". Es liegt auch im Rahmen der Erfindung, dass die Kunststoffmatrix aus zumindest einem Copolymer der vorgenannten Kunststoffe besteht. Als Polyamid kann z. B. Polyamid 6 eingesetzt werden. Wenn die Kunststoffmatrix aus zumindest einem Polyol besteht, kann beispielsweise Polypropylenglykol verwendet werden. Als Kautschuk für die Kunststoffmatrix können z. B. Polyisopren, Poly(styrol-co-butadien) oder Poly(acrylnitril-co-butadien) eingesetzt werden. Als Material für die Kunststoffmatrix kann nach einer Ausführungsform Butadien-Kautschuk verwendet werden. Gemäß einer anderen Ausführungsform der Erfindung besteht die Kunststoffmatrix aus zumindest einem Kunststoff aus der Gruppe "Polyalkylenterephthalat, Polyalkylenoxid, Polyvinylalkohol, Polycarbonat". Als Polyalkylenterephthalat kann beispielsweise Polybutylenterephthalat für die Kunststoffmatrix eingesetzt werden. Es liegt auch im Rahmen der Erfindung, dass die Kunststoffmatrix aus zumindest einem Kunststoff aus der Gruppe "Polyvinylpyrolidon, Polyimid, Polycaprolacton, Polyoxymethylen, Polyvinylchlorid" besteht. Fernerhin liegt es im Rahmen der Erfindung, dass für die Kunststoffmatrix zumindest ein Copolymer aus den vorgenannten Kunststoffen eingesetzt wird.

Durch Einbringen des mit der erfindungsgemäßen polymeren Verbindung modifizierten Schichtsilikates in die Kunststoffmatrix werden bestimmte Eigenschaften des Kunststoffes beachtlich verbessert. Zunächst wird mit der erfindungsgemäßen Lehre eine überraschend weitgehende Permeationsreduzierung des Kunststoffes erzielt. Außerdem werden durch die erfindungsgemäße Behandlung des Kunststoffes überraschende Brandschutzeigenschaften verwirklicht. In einem Brandfall wird das Brennen bzw. Weiterbrennen eines Gegenstandes aus dem erfindungsgemäß behandelten Kunststoff minimiert bzw. völlig verhindert. Auch das Abtropfen des im Brandfall stark erhitzten Kunststoffes kann durch die erfindungsgemäße Behandlung beachtlich reduziert werden. - Die Begriffe Kunststoff und Kunststoffmatrix meinen im Rahmen der Erfindung die Kunststoffsubstanz, die erfindungsgemäß mit dem Schichtsilikat und der zumindest einen polymeren Verbindung versetzt wird bzw. behandelt wird. Der Ausdruck Kunststoffmaterial bzw. erfindungsgemäßes Kunststoffmaterial meint den bereits mit dem Schichtsilikat und mit der zumindest einen polymeren Verbindung versetzten Kunststoff.

Grundsätzlich können im Rahmen der Erfindung verschiedene Schichtsilikate, beispielsweise Talk, Glimmer oder anorganische Pigmente eingesetzt werden. Nach einer sehr bevorzugten Ausführungsform, der im Rahmen der Erfindung besondere Bedeutung zukommt, ist als Schichtsilikat ein Montmorillonit eingesetzt. Nach einer anderen bevorzugten Ausführungsform der Erfindung ist als Schichtsilikat Bentonit eingesetzt. Neben den vorgenannten natürlichen Schichtsilikaten können aber auch synthetische Schichtsilikate verwendet werden. Mit solchen synthetischen Schichtsilikaten kann insbesondere die Transparenz der Kunststoffmatrix auf wirksame Weise eingestellt werden. - Vorzugsweise enthält das erfindungsgemäße Kunststoffmaterial 1 bis 50 Gew.%, vorzugsweise 2 bis 10 Gew.% eines Schichtsilikates.

Nach sehr bevorzugter Ausführungsform, der im Rahmen der Erfindung ganz besondere Bedeutung zukommt, weist die polymere Verbindung an zumindest zwei benachbarten Kohlenstoffatomen jeweils zumindest eine Carboxylatgruppe und/oder eine Carboxylgruppe auf. So liegt es im Rahmen der Erfindung, dass an einem Kohlenstoffatom der polymeren Verbindung eine Carboxylatgruppe (-COO⁻) und an einem benachbarten Kohlenstoffatom der polymeren Verbindung eine Carboxylgruppe (-COOH) angeschlossen ist. Statt der Carboxylgruppe kann grundsätzlich an dem benachbarten Kohlenstoffatom auch eine Estergruppe (-COOR) oder eine Amidgruppe (-CONHR) angeschlossen sein.

Es liegt im Rahmen der Erfindung, dass die als Ammoniumsalz vorliegende polymere Verbindung ein Tetraalkylammoniumion aufweist. Dem Carboxylation ist in der polymeren Verbindung somit ein quartäres Ammoniumion NR₄⁺ zugeordnet. Vorzugsweise weist die polymere Verbindung ein Trimethylalkylammoniumion auf, bei der an das N-Atom drei Methylgruppen sowie eine andere davon unterschiedliche Alkylgruppe angeschlossen ist. Es liegt auch im Rahmen der Erfindung, dass die polymere Verbindung ein quartäres Alkylaryl-, Dialkylaryl- oder Trialkylarylammoniumion aufweist.

Gegenstand der Erfindung ist auch ein Verfahren zur Herstellung eines Kunststoffmaterials, wobei eine polymere Verbindung als Ammoniumsalz mit zumindest einer Carboxylatgruppe hergestellt wird und mit zumindest einem Schichtsilikat gemischt wird und wobei das mit der polymeren Verbindung modifizierte Schichtsilikat in die Kunststoffmatrix eingebracht wird. - Es liegt dabei im Rahmen der Erfindung, dass zunächst eine polymere Basisverbindung hergestellt wird, die zumindest eine Carboxylgruppe (-COOH) enthält. Zu dieser polymeren Basisverbindung wird dann vorzugsweise ein quartäres Ammoniumsalz gegeben. Hierbei handelt es sich zweckmäßigerweise um ein Ammoniumhalogenid, vorzugsweise ein Tetraalkylammoniumhalogenid NR₄X (vorzugsweise ist X = Cl, Br). Erfindungsgemäß wird die Carboxylgruppe der polymeren Basisverbindung in eine Carboxylatgruppe bzw. ein Carboxylation überführt, dem dann ein quartäres Ammoniumkation zugeordnet ist, so dass die polymere Verbindung als Ammoniumsalz vorliegt.

Es liegt im Rahmen der Erfindung, dass die erfindungsgemäße polymere Verbindung durch Copolymerisation von zumindest einem ungesättigten Kohlenwasserstoff mit einer ungesättigten Carbonsäure und/oder mit zumindest einem Derivat einer ungesättigten Carbonsäure erhalten wird. Nach einer Ausführungsform der Erfindung wird die polymere Verbindung durch Copolymerisation von zumindest einem ungesättigten Kohlenwasserstoff mit zumindest zehn Kohlenstoffatomen, vorzugsweise mit mehr als zwanzig Kohlenstoffatomen, mit zumindest einer ungesättigten polyvalenten Carbonsäure und/oder mit zumindest einem Derivat einer ungesättigten polyvalenten Carbonsäure hergestellt. Nach einer Ausführungsform der Erfindung weist der ungesättigte Kohlenwasserstoff lediglich eine C-C-Doppelbindung auf. Es liegt im Rahmen der Erfindung ein α-Olefin einzusetzen. Bevorzugt weist der ungesättigte Kohlenwasserstoff mehr als fünfundzwanzig Kohlenstoffatome auf, beispielsweise fünfundzwanzig bis fünfzig Kohlenstoffatome. Polyvalente Carbonsäure meint im Rahmen der Erfindung eine Carbonsäure mit mehr als einer Carboxylgruppe. Nach sehr bevorzugter Ausführungsform, der im Rahmen der Erfindung ganz besondere Bedeutung zukommt, wird dabei eine polyvalente Carbonsäure eingesetzt, die jeweils eine Carboxylgruppe an zwei benachbarten Kohlenstoffatomen aufweist oder es wird ein Derivat einer solchen polyvalenten Carbonsäure eingesetzt. Derivat einer Carbonsäure meint im Rahmen der Erfindung insbesondere ein Säureanhydrid oder ein Säureester.

- Nach sehr bevorzugter Ausführungsform weist die als Ammoniumsalz vorliegende polymere Verbindung die nachfolgend dargestellte Struktur auf:

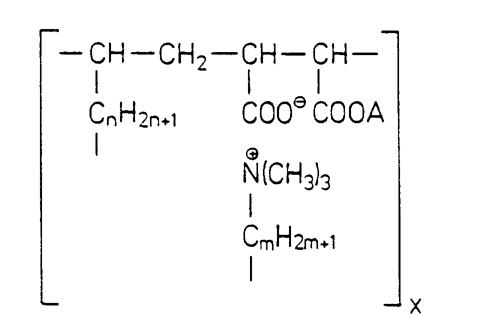

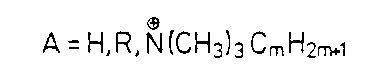

In dieser Formel gilt vorzugsweise n ≥ 16 und m ≤ 20. Außerdem gilt vorzugsweise x = 1-100, bevorzugt x = 2-100.

Nach sehr bevorzugter Ausführungsform, der im Rahmen der Erfindung ganz besondere Bedeutung zukommt, wird die polymere Verbindung durch Copolymerisation des ungesättigten Kohlenwasserstoffs mit zumindest einer ungesättigten Dicarbonsäure und/oder mit zumindest einem Derivat einer ungesättigten Dicarbonsäure hergestellt. Dabei wird vorzugsweise eine Dicarbonsäure eingesetzt, die an zwei benachbarten Kohlenstoffatomen jeweils eine Carboxylgruppe aufweist oder es wird ein Derivat einer solchen Dicarbonsäure verwendet. Im Rahmen der Erfindung können als ungesättigte Dicarbonsäuren zweckmäßigerweise Maleinsäure oder Fumarsäure eingesetzt werden. Als Derivat einer ungesättigten Dicarbonsäure können vorzugsweise Maleinsäureanhydrid oder ein Maleinsäureester oder ein Fumarsäureester verwendet werden.

Eine sehr bevorzugte Ausführungsform des erfindungsgemäßen Verfahrens ist dadurch gekennzeichnet, dass die Herstellung der polymeren Verbindung als Ammoniumsalz und die Mischung mit dem Schichtsilikat in einem Verfahrensschritt erfolgt. Das auf diese Weise modifizierte Schichtsilikat wird dann in die Kunststoffmatrix eingebracht. Gemäß dieser bevorzugten Ausführungsform der Erfindung kann die Herstellung der polymeren Verbindung als Ammoniumsalz und die Modifizierung des Schichtsilikates in einem Verfahrensschritt und somit gleichsam gleichzeitig durchgeführt werden. Herstellung des Ammoniumsalzes meint dabei zweckmäßigerweise, dass zu der polymeren Basisverbindung, die zumindest eine Carboxylgruppe oder zumindest eine Carboxylatgruppe enthält, ein erstes Ammoniumsalz gegeben wird, so dass die polymere Verbindung in Form eines Ammoniumsalzes gebildet wird. Durch die letztgenannte Ausführungsform des erfindungsgemäßen Verfahrens werden gegenüber aus dem Stand der Technik bekannten Modifizierungen von Schichtsilikaten die Anzahl der Verfahrensschritte beachtlich reduziert und somit wird auch der Aufwand reduziert.

Es liegt im Rahmen der Erfindung, dass das modifizierte Schichtsilikat zunächst zu einer geringen Menge des Kunststoffes gemischt wird, so dass eine Mischung (Masterblend) mit einem Gehalt zwischen 20 und 60 Gew.% an dem Schichtsilikat erhalten wird. Im Anschluss daran wird dieses Masterblend mit der übrigen Menge Kunststoff gemischt. Das Mischen des modifizierten Schichtsilikates mit dem Kunststoff findet zweckmäßigerweise während eines Extrusionsvorganges statt.

Der Erfindung liegt die Erkenntnis zugrunde, dass ein Kunststoffmaterial mit hervorragender Permeationsreduzierung hergestellt werden kann, wenn die erfindungsgemäßen Maßnahmen verwirklicht werden. Es muss aber betont werden, dass nicht nur eine optimale Permeationsreduzierung erreicht werden, sondern zusätzlich sowohl eine überraschend hohe Steifigkeit als auch eine überraschend hohe Oberflächenpolarität des Kunststoffmaterials erzielt wird. Der Erfindung liegt fernerhin die Erkenntnis zugrunde, dass sich Schichtsilikate, insbesondere Montmorillonit und/oder Bentonit aber auch synthetische Schichtsilikate, einfach und problemlos in einer Kunststoffmatrix verteilen bzw. dispergieren lassen, wenn die erfindungsgemäße Lehre realisiert wird. Aufgrund der genannten erhöhten Steifigkeit und der erhöhten Oberflächenpolarität des erfindungsgemäßen Kunststoffmaterials ist der Einsatz dieses Materials nicht lediglich auf Verwendungszwecke beschränkt, bei denen eine reduzierte Permeation gewünscht wird. Vielmehr lässt sich das erfindungsgemäße Kunststoffmaterial auch für andere Zwecke einsetzen, wenn beispielsweise eine hervorragende Steifigkeit und/oder eine hohe Oberflächenpolarität gewünscht wird. Das Kunststoffmaterial weist im übrigen noch eine Mehrzahl von weiteren Vorteilen auf. So zeichnet sich das erfindungsgemäße Kunststoffmaterial durch eine hervorragende Wärmeformbeständigkeit sowie durch optimale Tiefzieheigenschaften aus.

Behälterwandungen, die aus dem erfindungsgemäßen Kunststoffmaterial gefertigt sind, zeigen eine überraschend geringe Permeation von fluiden Medien. Das erfindungsgemäße Kunststoffmaterial lässt insbesondere eine Permeation von flüssigen Kohlenwasserstoffen bzw. Kohlenwasserstoffgemischen nicht zu oder weitestgehend nicht zu. Durch die erfindungsgemäß in dem Kunststoff dispergierten modifizierten Schichtsilikate werden somit die Barriereeigenschaften des Kunststoffes gegenüber fluiden Medien, insbesondere gegenüber Kohlenwasserstoffen/Kohlenwasserstoffgemischen überraschend verbessert. Die erfindungsgemäße Sperrwirkung gegen Permeation von Gasen und Flüssigkeiten konnte der Fachmann im Lichte des Standes der Technik nicht erwarten. - Zusätzlich zu den optimalen Sperrwirkungseigenschaften weist das erfindungsgemäße Kunststoffmaterial außerdem auch optimale mechanische Eigenschaften und verbesserte Oberflächeneigenschaften auf. Neben einer hohen Sperrwirkung bzw. neben positiven Permeationseigenschaften wird die Steifigkeit erhöht und die Schlagzähigkeit des Kunststoffmaterials wird nicht nachteilhaft beeinträchtigt. Damit lassen sich Bauteilgeometrien vereinfachen, Behälterwanddicken verringern und Material einsparen. Die optimalen polaren Eigenschaften der Oberflächen aus dem erfindungsgemäßen Kunststoffmaterial verbessern die Benetzung, so dass problemlos Beschichtungen, beispielsweise Lackierungen und Bedruckungen aufgebacht werden können.

Es wurde bereits darauf hingewiesen, dass das erfindungsgemäße Kunststoffmaterial insbesondere überraschende Brandschutzeigenschaften aufweist, so dass im Brandfall ein Weiterbrennen des Kunststoffmaterials verhindert wird und zusätzlich auch ein Abtropfen von geschmolzenem Kunststoffmaterial minimiert wird.

Gegenstand der Erfindung ist auch die Verwendung eines erfindungsgemäßen Kunststoffmaterials, bei dem in eine Kunststoffmatrix das erfindungsgemäß modifizierte Schichtsilikat eingebracht ist, als Behälter für fluide Medien, insbesondere als Behälter für kohlenwasserstoffhaltige fluide Medien. Vorzugsweise kann das erfindungsgemäße permeationsreduzierte Kunststoffmaterial zur Herstellung von Behältern für die Aufnahme von Kraftstoffen und Heizölen verwendet werden. Insoweit wird das erfindungsgemäße Kunststoffmaterial insbesondere für großvolumige Behälter, vor allem Lager- und Transportbehälter eingesetzt. Wenn die Behälterwandungen aus dem erfindungsgemäßen Kunststoffmaterial bestehen, wird wie oben bereits ausgeführt, die Permeation der fluiden Medien durch die Behälterwandung weitgehend verhindert. Das trifft insbesondere auch bei längerer Lagerung der fluiden Medien in den betreffenden Behältern zu.

Nachfolgend wird das erfindungsgemäße Verfahren anhand eines Ausführungsbeispiels näher erläutert:

Bei einer Reaktionstemperatur von 100 °C wurden unter starkem Rühren 673,12 g (1,6 mol) C₃₀H₆₀ mit 94,12 g (0,94 mol) Maleinsäureanhydrid und 39,48 g (0,24 mol) Azobisisobutyronitril (AIBN) zur Reaktion gebracht. Die Gesamtmenge an AIBN wurde in sieben Teilportionen innerhalb der ersten sechs Stunden hinzugefügt. Danach wurde noch eine Stunde bei Reaktionstemperatur nachgerührt. Der gesamte Ansatz wurde anschließend durch eine Heiß-Druckfiltration über 30 g Kieselgel gereinigt. Nach einer Vakuumbehandlung bei 80 °C/10 mbar erhielt man 723,63 g eines cremefarbenen Festproduktes.

Es wurden 8 g (0,2 mol) Natriumhydroxid mit 20 ml Wasser vorgelegt. Dazu wurden 256,08 g (0,2 mol) Cetyltrimethylammoniumchlorid (25 Gew.%ige Lösung in Wasser) und 103,78 g des obengenannten Festproduktes gegeben. Diese Mischung wurde bei 80 °C vier Stunden lang gerührt. Dann wurde die Emulsion mit halbkonzentrierter Salzsäure neutralisiert. Anschließend wurden 311,34 g nichtmodifiziertes Montmorillonit zugegeben und der Ansatz mit Wasser auf ein Gesamtvolumen von 1,5 l aufgefüllt. Diese Mischung wurde für weitere fünf Stunden bei 80 °C homogenisiert, bevor sie unter Rühren auf 5 °C abgekühlt wurde. Der Ansatz wurde abgesaugt und das zurückbleibende Material portionsweise mit insgesamt 4 l eiskaltem Wasser gewaschen. Nach der Trocknung bei 35 °C/15 mbar erhielt man 432,93 g eines grau-pulvrigen Materials.

In einem Extruder wurden bei 180°C mit 150 U/min 231,0 g des grau-pulvrigen Materials mit 269 g Polyethylen zu einem PE-Blend gemischt, das 30 % Montmorillonit enthält.

## Patentansprüche

1. Kunststoffmaterial, insbesondere für Behälter zur Aufnahme von fluiden Medien,
wobei eine Kunststoffmatrix aus zumindest einem Kunststoff vorgesehen ist,
wobei diese Kunststoffmatrix eine Mischung aus zumindest einem Schichtsilikat und zumindest einer polymeren Verbindung enthält und
wobei die polymere Verbindung zumindest eine Carboxylatgruppe aufweist und als Ammoniumsalz vorliegt.

2. Kunststoffmaterial nach Anspruch 1, wobei die Kunststoffmatrix aus zumindest einem Polyolefin, vorzugsweise aus Polyethylen, und/oder aus zumindest einem Kunststoff aus der Gruppe "Polyamid, Polyester, Polyol, Polyurethan, Polystyrol, Kautschuk" besteht.

3. Kunststoffmaterial nach einem Ansprüche 1 oder 2, wobei das Schichtsilikat ein Montmorillonit ist.

4. Kunststoffmaterial nach einem der Ansprüche 1 bis 3, wobei die polymere Verbindung an zumindest zwei benachbarten Kohlenstoffatomen jeweils zumindest eine Carboxylatgruppe und/oder eine Carboxylgruppe aufweist.

5. Kunststoffmaterial nach einem der Ansprüche 1 bis 4, wobei die als Ammoniumsalz vorliegende polymere Verbindung ein Tetraalkylammoniumion aufweist.

6. Verfahren zur Herstellung eines Kunststoffmaterials,
wobei eine polymere Verbindung als Ammoniumsalz mit zumindest einer Carboxylatgruppe hergestellt wird und mit zumindest einem Schichtsilikat gemischt wird
und wobei das mit der polymeren Verbindung modifizierte Schichtsilikat in eine Kunststoffmatrix aus zumindest einem Kunststoff eingebracht wird.

7. Verfahren nach Anspruch 6, wobei die polymere Verbindung durch Copolymerisation von zumindest einem ungesättigten Kohlenwasserstoff mit zumindest zehn Kohlenstoffatomen, vorzugsweise mit mehr als zwanzig Kohlenstoffatomen, mit zumindest einer ungesättigten polyvalenten Carbonsäure und/oder mit zumindest einem Derivat einer ungesättigten polyvalenten Carbonsäure hergestellt wird.

8. Verfahren nach Anspruch 7, wobei die polymere Verbindung durch Copolymerisation des ungesättigten Kohlenwasserstoffs mit zumindest einer ungesättigten Dicarbonsäure und/oder mit zumindest einem Derivat einer ungesättigten Dicarbonsäure hergestellt wird.

9. Verfahren nach einem der Ansprüche 6 bis 8, wobei die Herstellung der polymeren Verbindung in der Form als Ammoniumsalz und die Mischung mit dem Schichtsilikat in einem Verfahrensschritt erfolgt und das auf diese Weise modifizierte Schichtsilikat in die Kunststoffmatrix eingebracht wird.
